# EUROPEAN PATENT SPECIFICATION

(11) **EP 1 655 334 B1**
(45) Date of publication and mention of the grant of the patent: **27.12.2006**
(21) Application number: 04026094.5
(22) Date of filing: 03.11.2004
(51) Int. Cl.: C08L 23/04, C08L 23/06, C08F 10/02, C08F 2/00

(54) **Multimodal polyethylene composition with improved homogeneity**
Multimodale Polyethylenzusammensetzung mit verbesserter Homogenität
Composition de polyéthylène multimodal avec homogénéité améliorée

(43) Date of publication of application: 10.05.2006
(73) Proprietor: Borealis Technology Oy, 06101 Porvoo (FI)
(72) Inventor: Bäckman, Mats, 416 51 Göteborg (SE); Van Praet, Erik, 3200 Holsbeek (BE); Gustafsson, Bill, 444 41 Stenungsund (SE); Van Marion, Remko, 06100 Porvoo (FI)
(74) Representative: Kador & Partner

(56) References cited:
- EP-A- 1 146 079
- EP-A- 1 460 105
- WO-A-20/04058878
- US-A1- 2002 156 214
- US-A1- 2003 208 010

## Description

The present invention concerns a multimodal polyethylene composition comprising a low molecular weight fraction, a high molecular weight fraction and an ultrahigh molecular weight fraction, with improved homogeneity. Furthermore, the present invention relates to a process for the production of such a composition as well as to the use of such a composition for the production of a pipe, for moulding applications, and wire and cable applications.

Multimodal polyethylene compositions are frequently used e.g. for the production of pipes due to their favourable physical and chemical properties as e.g. mechanical strength, corrosion resistance and long-term stability. When considering that the fluids, such as water or natural gas, transported in a pipe often are pressurized and have varying temperatures, usually within a range of 0°C to 50°C, it is obvious that the polyethylene composition used for pipes must meet demanding requirements.

For multimodal polymers comprising more than one polymer fraction with different molecular weight, homogeneity is known to be a critical property, because low degrees of homogeneity adversely affect e.g. the surface properties and other properties of the polymer composition. For obtaining a sufficient degree of homogeneity, mixing of the different fractions the composition is consisting of must be reached down to the microscopic scale.

It is furthermore known that in the production of multimodal polymers, in particular when produced in a multistage process, advantageously a polymerisation catalyst is used which has been submitted to a prepolymerisation step. In such a prepolymerisation usually a small quantity of polymer is produced. However, by prepolymerisation, a further polymer fraction is introduced into the polymer composition which renders the achievement of homogeneity even more difficult.

When compounding multimodal polymer compositions e.g. for the production of pipes, so-called "white spots" occur in the compounded material. These white spots usually have a size of below 10 to about 50 micrometer and consist of high molecular weight polymer particles that have not been adequately compounded in the composition. Further, when compounding polymer compositions e.g. for the production of films, gel particles with a size of about 0.01 to 1 mm often occur. These gel particles also consist of high molecular weight polymer particles not adequately compounded and appear as disfiguring inhomogeneities in the finished film. Still further, inhomogeneities in multimodal polymer compositions may also cause waviness of the surface of articles produced thereof.

As a measure for the homogeneity in multimodal resins the ISO 18553 test can be applied. ISO 18553 originally is a method for rating pigmented spots, i.e. serves to determine how well pigments are dispersed in a polymer. As the dispersion of the pigment is dependent on the overall homogeneity of the polymer because inhomogeneities of the polymer are not coloured by the pigment, ISO 18553 can also be used as a measure for the homogeneity of a polymer by counting the non-coloured white spots and rating them according to the ISO 18553 scheme.

As a further measure for the homogeneity of a polymer, the white spot area test has been developed which to a far extent is based on the modified ISO 18553 white spot rating test as described in the above paragraph. This test is described in detail below.

It is known that homogeneity of a multimodal polymer composition can be improved by applying multiple compounding steps and/or particular compounding conditions to the resin coming from the reactor. These measures, however, have the disadvantage that they are associated with a significant increase in production costs for the composition.

It is, therefore, an object of the present invention to provide a multimodal polyethylene composition, comprising *inter alia* an ultrahigh molecular weight fraction, with improved homogeneity and thus improved properties, in particular surface properties. In particular, it is an object of the present invention to provide such a multimodal polyethylene composition having improved homogeneity directly after its production. At the same time, the composition should have good processing and good mechanical properties

The present invention provides in a first embodiment a polyethylene composition comprising a base resin comprising three ethylene homo- or copolymer fractions (A), (B) and (C) with different weight average molecular weight M_{w}, wherein
a) fraction (A) has an MFR₂₁ equal or lower than 20 g/10min,
b) fraction (B) has a lower weight average molecular weight than fraction (C),
c) fraction (C) has a lower weight average molecular weight than fraction (A),
d) the composition has a viscosity at a shear stress of 747 Pa (eta₇₄₇) of 350 kPas or higher, and
e) the composition has a MFR₅ of 0.15 g/10min or higher, and a white spot area of 1 % or below.

The present invention furthermore provides in a second a polyethylene composition comprising a base resin comprising three ethylene homo- or copolymer fractions (A), (B) and (C) with different weight average molecular weight M_{w}, wherein
a) fraction (A) has an MFR₂₁ equal or lower than 20 g/10min,
b) fraction (B) has a lower weight average molecular weight than fraction (C),
c) fraction (C) has a lower weight average molecular weight than fraction (A),
d) the composition has a viscosity at a shear stress of 747 Pa (eta₇₄₇₎ of 350 kPas or higher, and
e) the composition has a MFR₅ of 0.15 g/10min or higher and a rating in the ISO 18553 white spot rating test of below 4.5.

The polyethylene compositions according to the invention have an improved microscopic mixing directly after its production, which is demonstrated by the fact that already after a single, usual compounding step a resin with an excellent homogeneity is obtained. Thus, the composition combines good mechanical with good surface properties and hence e.g. an improved impact strength with an improved appearance of the final product.

The term "base resin" means the entirety of polymeric components in the polyethylene composition according to the invention, usually making up at least 90 wt% of the total composition. Preferably, the base resin in its entirety is consisting of fractions (A), (B) and (C).

In addition to the base resin, usual additives for utilization with polyolefins, such as pigments (for example carbon black), stabilizers (antioxidant agents), antacids and/or anti-UVs, antistatic agents and utilization agents (such as processing aid agents) may be present in the polyethylene composition. Preferably, the amount of these additives is 10 wt% or below, further preferred 8 wt% or below, of the total composition.

Preferably, the composition comprises carbon black in an amount of 8 wt% or below, further preferred of 1 to 4 wt%, of the total composition.

Further preferred, the amount of additives different from carbon black is 1 wt% or less, more preferably 0.5 wt% or less.

Usually, a polyethylene composition comprising at least two polyethylene fractions, which have been produced under different polymerisation conditions resulting in different (weight average) molecular weights for the fractions, is referred to as "multimodal". The prefix "multi" relates to the number of different polymer fractions the composition is consisting of. Thus, for example, if the composition according to the present invention consists of the three fractions (A), (B) and (C) is it usually referred to as "trimodal".

The form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In the first embodiment of the composition according to the invention, the composition preferably has a rating in the ISO 18553 white spot rating test of below 4.5.

The following preferred embodiments pertain to both the first and the second embodiment of the composition according to the invention.

The base resin preferably has an MFR₅ of 0.1 g/10min or above, further preferred of 0.15 g/10min or above.

Further, the base resin preferably has an MFR₅ of 10 g/10min or below, more preferably 5 g/10min or below, and most preferably 2 g/10min or below.

Still further, the base resin preferably has an MFR₂₁ of 1 to 50 g/10min.

The FRR_{21/5} of the base resin preferably is from 10 to 100, and more preferably is from 15 to 70.

The density of the base resin is preferably 915 kg/m³ or more, more preferably 930 kg/m³ or more. Further, the density of the base resin is preferably 970 kg/m³ or less.

The weight average molecular weight of the base resin preferably is from 100,000 to 1,000,000 g/mol, and more preferably from 200,000 to 800,000 g/mol.

Usually, the composition according to the invention, measured after a single compounding step as defined below, has a white spot area of 0.01 to 1 %. Further preferred, the polyethylene composition, after said single compounding step, has a white spot area of 0.7 % or below, usually of 0.01 to 0.7 %.

Furthermore, the polyethylene composition, measured after a single compounding step as defined below, preferably has a rating in the ISO 18553 white spot rating test of below 4, more preferred of below 3. Usually then, the composition, after said single compounding step, has a rating in the ISO 18553 white spot test of preferably 0.01 to below 4, more preferably of 0.01 to below 3.

Preferably, fraction (A) is present in the base resin in an amount of from 0.5 to 15 wt%, more preferred in an amount of from 0.5 to 10 wt% and still more preferred in an amount of from 0.5 to 5 wt%.

Fraction (A) preferably has a density of 900 kg/m³ or more, more preferably of 915 kg/m³ or more. Further, fraction (A) preferably has a density of 980 kg/m³ or less, more preferably of 965 kg/m³ or less.

Fraction (B) preferably is present in the base resin in an amount of 20 to 60 wt% of the base resin.

Further preferred, fraction (B) preferably is an ethylene homopolymer.

Fraction (B) preferably has a density of 915 kg/m³ or more, more preferably of 940 kg/m³ or more. Further, fraction (B) preferably has a density of 980 kg/m³ or less.

Fraction (C) preferably is present in the base resin in an amount of 20 to 60 wt% of the base resin.

Further preferred, fraction (C) of the polyethylene composition is a copolymer of ethylene with one or more alpha-olefin comonomers.

Preferably, the alpha-olefin comonomer of fraction (C) is having from 4 to 8 carbon atoms, and more preferably is selected from 1-butene, 1-hexene, 4-methyl-1-pentene and 1-octene.

The polyethylene composition according to the invention preferably has a MFR₅ of 0.15 g/10min or above, more preferably 0.20 g/10min or above.

Furthermore, the polyethylene composition according to the invention preferably has a shear thinning index SHI_{(2.7/210)} of 5 to 300, more preferably of 10 to 280, still more preferably of 15 to 260, and most preferably of 17 to 150.

The SHI is the ratio of the viscosity of the polyethylene composition at different shear stresses. In the present invention, the shear stresses at 2.7 kPa and 210 kPa are used for calculating the SHI_{2.7/210} which may serve as a measure of the broadness of the molecular weight distribution.

Furthermore, the polyethylene composition preferably has a viscosity at a shear stress of 2.7 kPa (eta_{(2.7)}) of 10 to 500 kPas, more preferably 20 to 450 kPas and most preferably 40 to 400 kPas.

The polyethylene composition according to the invention preferably has a value for eta₇₄₇ of 550 kPas or higher, more preferably of 600 kPas or higher.

Where herein preferred features of fractions (A), (B) and (C) of the composition of the present invention are given, these values are generally valid for the cases in which they can be directly measured on the respective fraction, e.g. when the fraction is separately produced or produced in the first stage of a multistage process.

However, the base resin may also be and preferably is produced in a multistage process wherein e.g. fractions (A), (B) and (C) are produced in subsequent stages. In such a case, the properties of the fractions produced in the second and third step (or further steps) of the multistage process can either be inferred from polymers, which are separately produced in a single stage by applying identical polymerisation conditions (e.g. identical temperature, partial pressures of the reactants/diluents, suspension medium, reaction time) with regard to the stage of the multistage process in which the fraction is produced, and by using a catalyst on which no previously produced polymer is present. Alternatively, the properties of the fractions produced in a higher stage of the multistage process may also be calculated, e.g. in accordance with B. Hagström, Conference on Polymer Processing (The Polymer Processing Society), Extended Abstracts and Final Programme, Gothenburg, August 19 to 21, 1997, 4:13.

Thus, although not directly measurable on the multistage process products, the properties of the fractions produced in higher stages of such a multistage process can be determined by applying either or both of the above methods. The skilled person will be able to select the appropriate method.

Fraction (A) preferably has a weight average molecular weight of from 600,000 g/mol to 5,000,000 g/mol, more preferably from 600,000 to 2,000,000 g/mol.

Fraction (A) preferably has an MFR₂₁ of 10 g/10min or below, more preferably of 5 or below.

Fraction (B) preferably has a weight average molecular weight of from 2,000 g/mol to 50,000 g/mol, more preferably from 5,000 to 30,000 g/mol.

Fraction (B) of the polyethylene composition preferably has an MFR₂ of 10 g/10 min or more, more preferably of 80 g/10min or more.

The weight average molecular weight of fraction (C) is preferably from 30,000 to 600,000 g/mol, more preferably from 50,000 to 500,000 g/mol.

In the production of the base resin Ziegler-Natta (ZN) or metallocene catalysts are preferably used, more preferably Ziegler-Natta catalysts.

The catalyst may be supported, e.g. with conventional supports including silica, Al-containing supports and magnesium dichloride based supports. Preferably the catalyst is a ZN catalyst, more preferably the catalyst is non-silica supported ZN catalyst, and most preferably MgCl₂-based ZN catalyst.

The Ziegler-Natta catalyst further preferably comprises a group 4 (group numbering according to new IUPAC system) metal compound, preferably titanium, magnesium dichloride and aluminium.

The catalyst may be commercially available or be produced in accordance or analogously to the literature. For the preparation of the preferable catalyst usable in the invention reference is made to WO2004055068 and WO2004055069 of Borealis and EP0 810 235. The content of these documents in its entirety is incorporated herein by reference, in particular concerning the general and all preferred embodiments of the catalysts described therein as well as the methods for the production of the catalysts. Particularly preferred Ziegler-Natta catalysts are described in EP 0 810 235.

The base resin of the polyethylene composition according the invention preferably is produced so that at least one of fractions (B) and (C), preferably (C), is produced in a gas-phase reaction.

With regard to the production process of the polyethylene composition according to the invention, it is preferred that one of the fractions (B) and (C) of the base resin, preferably fraction (B), is produced in a slurry reaction, preferably in a loop reactor.

Furthermore, the polyethylene base resin preferably is produced in a multistage process. Polymer compositions produced in such a process are also designated as "in-situ"-blends.

A multistage process is defined to be a polymerisation process in which a polymer comprising two or more fractions is produced by producing each, or at least two, polymer fraction(s) in a separate reaction stage, usually with different reaction conditions in each stage, in the presence of the reaction product of the previous stage which comprises a polymerisation catalyst.

Accordingly, it is preferred that fractions (A), (B) and (C) of the polyethylene composition are produced in different stages of a multistage process.

Preferably, the multistage process comprises at least one gas phase stage in which, preferably, fraction (C) is produced.

Further preferred, fraction (C) is produced in a subsequent stage in the presence of fraction (B) which has been produced in a previous stage.

It is previously known to produce multimodal olefin polymers, such as multimodal polyethylene, in a multistage process comprising two or more reactors connected in series. As instance of this prior art, mention may be made of EP 517 868, which is hereby incorporated by way of reference in its entirety, including all its preferred embodiments as described therein, as a preferred multistage process for the production of the base resin of polyethylene composition according to the invention.

Preferably, the main polymerisation stages of the multistage process are such as described in EP 517 868, i.e. the production of fractions (B) and (C) is carried out as a combination of slurry polymerisation for fraction (B)/gas-phase polymerisation for fraction (C). The slurry polymerisation is preferably performed in a so-called loop reactor. Further preferred, the slurry polymerisation stage precedes the gas phase stage.

Preferably, the main polymerisation stages, i.e. the production of fractions (B) and (C) are preceded by the production of fraction (A) in a first stage. Fraction (A) is preferably an ethylene homopolymer. At this first polymerisation stage which may be designated as prepolymerisation, preferably all of the catalyst is charged into a loop reactor and the polymerisation is preferably performed as a slurry polymerisation.

The resulting end product consists of an intimate mixture of the polymers from the different polymerisation stage. The different molecular-weight- distribution curves of these polymers together form a molecular-weight- distribution curve having a broad maximum or several maxima, i.e. the end product is a multimodal polymer mixture.

It is preferred that the multimodal base resin of the polyethylene composition according to the invention is a trimodal polyethylene mixture consisting of fractions (B) and (C), and fraction (A). It is also preferred that this trimodal polymer mixture has been produced by polymerisation as described above under different polymerisation conditions in two or more polymerisation reactors connected in series. Owing to the flexibility with respect to reaction conditions thus obtained, it is most preferred that the polymerisation is carried out in a loop reactor/a gas-phase reactor combination.

Preferably, the polymerisation conditions in the preferred multistage method are so chosen that the comparatively low-molecular weight polymer (B), preferably having no content of comonomer, is produced in one stage, preferably the first stage after prepolymerisation of fraction (A), owing to a high content of chain-transfer agent (hydrogen gas), whereas the high-molecular weight polymer (C), preferably having a content of comonomer, is produced in another stage, preferably the second stage. This preferred order of stages may, however, be reversed.

In the preferred embodiment of the polymerisation, the temperature in the loop reactor where preferably fraction (B) is produced is preferably is 85 to 115 °C, preferably 90 to 105 °C and most preferably 92 to 98 °C.

Preferably, the temperature in the gas-phase reactor, where preferably fraction (C) is produced, is 70 to 105 °C, more preferably is 75 to 100 °C, and most preferably is 82 to 97 °C.

A chain-transfer agent, preferably hydrogen, is added as required to the reactors, and preferably 100 to 800 moles of H₂/kmoles of ethylene are added to the reactor, when the LMW fraction is produced in this reactor, and 0 to 50 moles of H₂/kmoles of ethylene are added to the gas phase reactor when this reactor is producing the HMW fraction.

Preferably, the base resin of the polyethylene composition is produced with a rate of at least 5 tons/h, more preferably at least 10 ton/h, and most preferably at least 15 tons/h.

The composition of the invention preferably if produced in a process comprising compounding step, wherein the composition of the base resin, i.e. the blend, which is typically obtained as a base resin powder from the reactor, is extruded in an extruder and then pelletised to polymer pellets in a manner known in the art.

Optionally, additives or other polymer components can be added to the composition during the compounding step in the amount as described above. Preferably, the composition of the invention obtained from the reactor is compounded in the extruder together with additives in a manner known in the art.

The extruder may be e.g. any conventionally used extruder.. As an example of an extruder for the present compounding step may be those as supplied by Japan steel works, Kobe steel or Farrel-Pomini, e.g. JSW 460P.

In one embodiment, the extrusion step is carried out using production rates of at least 400, at least 500, at least 1000 kg/h may be used in said compounding step.

In another embodiment the compounding step can be effected with production rate of that least 5 tons/h, preferably at least 15 tons/h, more preferably at least 20 or 25 tons/h or even at least 30 or more tons/h, such as at least 50, such 1-50, preferably 5-40, 10-50, in some embodiments 10-25 tons/h.

Alternatively, production rates at least 20 tons/h, preferably at least 25 tons/h, even at least 30 tons/h, e.g. 25-40 tons/h may be desired during the compounding step.

The present multimodal polyethylene composition of the invention enables such production rates within the property window of the invention, i.e. with various property combinations of MFR's of the fractions and of final base resin variations together with excellent homogeneity, just to mention few.

Preferably, in said extrusion step, a total SEI (specific energy input) of the extruder may be at least 150, 150-400, 200-350, 200-300 kWh/ton.

It is known that the temperature of the polymer melt may vary in the extruder, the highest (max) melt temperature of the composition in the extruder during the extrusion step is typically more than 150°C, suitably between 200 to 350°C, preferably 250 to 310°C, more pref. 250 to 300°C.

The benefit of the invention is that an excellent homogeneity can be obtained without extensive mixing, already by effecting once the compounding step, e.g. the preferable extrusion with production rates as defined above, and additionally, together with the high level homogeneity desirable polymer properties can be achieved/maintained.

Furthermore, the present invention relates to an article, such as a pipe, an injection moulded article, a wire or cable, or a high density film, comprising a polyethylene composition as described above, and to the use of such a polyethylene composition for the production of such an article.

### Experimental and Examples

### 1. Definitions and measurement methods

### a) Molecular weight

The weight average molecular weight M_{w} and the molecular weight distribution (MWD = M_{w}/Mₙ wherein Mₙ is the number average molecular weight and M_{w} is the weight average molecular weight) is measured by a method based on ISO 16014-4:2003. A waters 150CV plus instrument was used with column 3 x HT&E styragel from Waters (divinylbenzene) and trichlorobenzene (TCB) as solvent at 140 °C. The column set was calibrated using universal calibration with narrow MWD PS standards (the Mark Howings constant K: 9.54*10⁻⁵ and a: 0.725 for PS, and K: 3.92*10⁻⁴ and a: 0.725 for PE). The ratio of M_{w} and Mₙ is a measure of the broadness of the distribution, since each is influenced by the opposite end of the "population".

### b) Density

Density is measured according to ISO 1872, Annex A.

### c) Melt Flow Rate/Flow Rate Ratio

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190°C and may be determined at different loadings such as 2.16 kg (ISO 1133 condition D - "MFR₂"), 5 kg (ISO 1133 condition T - "MFR₅") or 21.6 kg (ISO 1133 condition G - "MFR₂₁").

The quantity FRR (flow rate ratio) is an indication of molecular weight distribution and denotes the ratio of flow rates at different loadings. Thus, FRR_{21/5} denotes the value of MFR₂₁/MFR₅.

### d) Rheological Parameters

Rheological parameters such as Shear Thinning Index SHI and Viscosity are determined by using a rheometer, preferably a Rheometrics Phisica MCR 300 Rheometer. The definition and measurement conditions are described in detail on page 8 line 29 to page 11, line 25 of WO 00/22040.

### e) Measurement of Homogeneity - White spot area test

The polymer composition according to the present invention has an improved homogeneity directly after its production in the polymerisation reactor. However, as, first, homogeneity is usually measured only on a compounded composition, and, second, the way in which compounding is carried out has a decisive influence on the homogeneity of the compounded composition, it is important that the compounding conditions to which the composition is subjected and the compounding equipment used are/is clearly defined before homogeneity of the composition is determined, e.g. in terms of the white spot area test or the modified ISO 18553 white spot rating test as described below.

Accordingly, homogeneity of the compositions described herein is determined after a single compounding step only, which is to be carried out as follows:

The base resin powder coming from the reactor is transferred, e.g. via intermediate holding tanks (50-250 tons), to the compounding unit without extra handling like grinding or cooling or similar processes.

The powder is then poured into the inlet of the compounder together with the appropriate amounts of additives. The additives can be, typically, stearates, antioxidants, UV-stabilisers, or pigments/carbon blacks. The additives can be added as a pure component or as a master batch with a PE carrier.

The base resin plus additives are then passed through the compounding unit only once.

No material that has passed the compounder once is allowed to be transferred back to the inlet of the compounder for further work nor is it allowed to pass the compounded material further to a second processing unit.

The idea of the single compounding step is that a reactor powder is allowed *only one single pass* through the compounding unit.

The equipment to be used for the single compounding step is a twin-screw extruder like counter rotating equipment as supplied by Japan steel works, e.g. CIM JSW 460P or equivalent equipment.

Typical compounding conditions in the single compounding step used in CIM JSW 460P having a screw diameter of 460 mm are:

| | |
|---|---|
| production: | 25 to 30 tons/h |
| mixer specific energy input (SEI): | 260 kWh/ton |
| gear pump SEI: | 19 kWh/ton |
| Temp. before gear pump: | 290 °C |
| Temp. after gear pump: | 300 °C |
| suction pressure gear pump: | 1.6 bar |
| mixer speed: | 400 rpm |

The white spot area of the once compounded composition is determined at least partly following ISO 18553, as follows:

A sample of a composition (including a pigment to make the inhomogeneities visible, e.g. carbon black in an amount of around 2.5 wt%) which is obtained after a single compounding step as described above, is analysed by first obtaining 6 microtome cuts of 6 different parts of the sample (thickness < 60 micrometer, diameter 3 to 5 mm).

The cuts are evaluated at a magnification of 100, and the size, i.e. the part of the surface, of the non-coloured inclusions ("white spots", agglomerates, particles) on a total surface of each cut of 0.7 mm² is determined. All white spots with a diameter > 5 microns are counted. The "white spot area" is then expressed as the averaged fraction of the white spots on the total surface of the sample cut.

### f) Measurement of homogeneity - Rating in modified ISO 18553 white spot rating test

In addition to the white spot area test, homogeneity complementary is determined according to the modified ISO 18553 white spot rating test. In this test, inhomogeneities of the composition present after a single compounding step as described above, which appear as white spots, are determined and rated according to the rating scheme given in ISO 18553. The lower the composition is rated in this test, the better is the homogeneity of the composition.

### 2. Polyethylene compositions

Production of polyethylene compositions base resins was performed in a multistage reaction comprising a first polymerisation stage in slurry in a 50 dm³ loop reactor (fraction (A)), followed by transferring the slurry to a 500 dm³ loop reactor wherein polymerisation was continued in slurry to produce the low molecular weight component (fraction (B)), and a second polymerisation in a gas phase reactor in the presence of the product from the second loop reactor to produce the comonomer containing high molecular weight component (fraction (C)). As comonomer, butene-1 has been used.

As a catalyst, *Lynx 200* available from Engelhard Corporation Pasadena, U.S.A. has been used for Example 1.

In comparative example 1, a catalyst prepared according to example 1 of EP 0 688 794 has been used.

The polymerisation conditions applied and the properties of the polymers obtained are listed in Table 1.

After production of fraction (C) (and hence the complete base resin), the obtained polymer powder was transferred to an extruder where it was compounded together with 2.5 wt% carbon black according to the procedure described under item e) above.

**Table 1:**

| | Example 1 | Comp. Exam. | units |
|---|---|---|---|
| **Prepolymeriser Product/Conditions** | | | |
| MFR₂ | | 40 | g/10min |
| MFR₂₁ | <0.1 | | g/10min |
| Temp. | 40 | 70 | °C |
| Amount | 2 | 1.5 | wt% |
| | | | |

| **Loop Reactor Product/Conditions** | | | |
|---|---|---|---|
| MFR₂ | 103 | 364 | g/10min |
| Density | >970 | > 970 | kg/cm³ |
| Temp. | 95 | 95 | °C |
| Pressure | 56 | 58 | bar |
| H₂/C₂ | 900 | 381 | mol/kmol |
| Amount | 48 | 47 | wt% |
| | | | |

| **Gas Phase Reactor Conditions/Base resin Properties** | | | |
|---|---|---|---|
| MFR5 | 0.18 | 0.21 | g/10min |
| MFR21 | 5.2 | 7.1 | g/10min |
| FRR21/5 | 28.3 | 34 | |
| Density | 946 | 950 | kg/cm³ |
| Amount | 50 | 51 | wt% |
| H2/C2 | 38 | 5 | mol/kmol |
| C4/C2 | 97 | 72 | mol/kmol |
| Temp. | 85 | 85 | °C |
| Pressure | 20 | 20 | bar |
| | | | |

| **Compounded Composition** | | | |
|---|---|---|---|
| MFR5 | 0.2 | 0.25 | g/10min |
| MFR21 | 6.5 | 9.05 | g/10min |
| FRR21/5 | 31.7 | 35.9 | |
| Density | 960 | 960 | kg/cm³ |
| ISO rating | 3.3 | 6.1 | |
| White Spot Area | 0.4 | 2.4 | |
| SHI | 48.5 | 56.9 | |
| Eta_{2.7} | 310 | 247 | kPas |
| Eta₇₄₇ | 675 | 464 | kPas |
| Carbon Black content | 2.5 | 2.5 | wt% |
| Mw | | 283000 | g/mol |
| Mn | | 6380 | g/mol |
| MWD | | 44.4 | |

## Claims

1. A polyethylene composition comprising a base resin comprising three ethylene homo- or copolymer fractions (A), (B) and (C) with different weight average molecular weight M_{w}, wherein
a) fraction (A) has an MFR₂₁ equal or lower than 20 g/10min,
b) fraction (B) has a lower weight average molecular weight than fraction (C),
c) fraction (C) has a lower weight average molecular weight than fraction (A),
d) the composition has a viscosity at a shear stress of 747 Pa (eta₇₄₇) of 350 kPas or higher, and
e) the composition has a MFR₅ of 0.15 g/10min or higher and a white spot area of 1% or below.

2. A polyethylene composition comprising a base resin comprising three ethylene homo- or copolymer fractions (A), (B) and (C) with different weight average molecular weight M_{w}, wherein
a) fraction (A) has an MFR₂₁ equal or lower than 20 g/10min,
b) fraction (B) has a lower weight average molecular weight than fraction (C),
c) fraction (C) has a lower weight average molecular weight than fraction (A),
d) the composition has an eta₇₄₇ of 350 kPas or higher, and
e) the composition has a MFR₅ of 0.15 g/10min or higher, and a rating in the ISO 18553 white spot rating test of below 4.5.

3. A polyethylene composition according to claim 1 wherein the composition has a rating in the ISO 18553 white spot rating test of below 4.5.

4. A polyethylene composition according to any of the preceding claims wherein fraction (B) is present in the base resin in an amount of 20 to 60 wt% of the base resin.

5. A polyethylene composition according to any of the preceding claims wherein fraction (C) is present in the base resin in an amount of 20 to 60 wt% of the base resin.

6. A polyethylene composition according to any of the preceding claims wherein fraction (B) is an ethylene homopolymer.

7. A polyethylene composition according to any of the preceding claims wherein fraction (C) is a copolymer of ethylene with one or more alphaolefin comonomers.

8. A polyethylene composition according to any of the preceding claims wherein fraction (A) has a density of 900 to 980 kg/m³, preferably of 915 to 965 kg/m³.

9. A polyethylene composition according to any of the preceding claims wherein fraction (B) has a density of 915 to 980 kg/m³, preferably of 940 to 980 kg/m³.

10. A polyethylene composition according to any of the preceding claims wherein the base resin has a density of 915 to 970 kg/m³, preferably of 930 to 970 kg/m³.

11. A polyethylene composition according to any of the preceding claims wherein the base resin has an MFR₅ of 0.1 to 10 g/10min.

12. A polyethylene composition according to any of the preceding claims wherein the base resin has been produced with a rate of at least 5 tons/h.

13. A polyethylene composition according to any of the preceding claims wherein fractions (A), (B) and (C) have been produced in different stages of a multi-stage process.

14. A process for the production of a polyethylene composition according to any of the preceding claims which process comprises producing fractions (A), (B) and (C) in the presence of a Ziegler-Natta catalyst.

15. A process according to claim 14 wherein fractions (A), (B) and (C) are produced in different stages of a multistage process.

16. An article comprising a polyethylene composition according to any of claims 1 to 13.

17. Article according to claim 16 wherein the article is a pipe.

18. Use of a polyethylene composition according to any of claims 1 to 13 for the production of an article.

19. Use according to claim 18 wherein the article is a pipe.

## Patentansprüche

1. Polyethylenzusammensetzung, die ein Grundharz umfaßt, das drei Ethylenhomo- oder -copolymeranteile (A), (B) und (C) mit einem unterschiedlichen Gewichtsmittel des Molekulargewichts M_{w} umfaßt, wobei:
a) der Anteil (A) eine MFR₂₁ hat, die gleich oder kleiner als 20 g/10 min ist,
b) der Anteil (B) ein geringeres Gewichtsmittel des Molekulargewichts als der Anteil (C) hat,
c) der Anteil (C) ein geringeres Gewichtsmittel des Molekulargewichts als der Anteil (A) hat,
d) die Zusammensetzung eine Viskosität bei einer Scherbeanspruchung von 747 Pa (η₇₄₇) von 350 kPas oder mehr hat, und
e) die Zusammensetzung eine MFR₅ von 0,15 g/10 min oder mehr und eine Fläche der weißen Punkte von 1 % oder weniger hat.

2. Polyethylenzusammensetzung, die ein Grundharz umfaßt, das drei Ethylenhomo- oder -copolymeranteile (A), (B) und (C) mit einem unterschiedlichen Gewichtsmittel des Molekulargewichts M_{w} umfaßt, wobei:
a) der Anteil (A) eine MFR₂₁ hat, die gleich oder kleiner als 20 g/10 min ist,
b) der Anteil (B) ein geringeres Gewichtsmittel des Molekulargewichts als der Anteil (C) hat,
c) der Anteil (C) ein geringeres Gewichtsmittel des Molekulargewichts als der Anteil (A) hat,
d) die Zusammensetzung einen Wert für η₇₄₇ von 350 kPas oder mehr hat, und
e) die Zusammensetzung eine MFR₅ von 0,15 g/10 min oder mehr und einen Wert beim Bewertungstest der weißen Punkte gemäß ISO 18553 von weniger als 4,5 aufweist.

3. Polyethylenzusammensetzung nach Anspruch 1, wobei die Zusammensetzung einen Wert beim Bewertungstest der weißen Punkte gemäß ISO 18553 von weniger als 4,5 hat.

4. Polyethylenzusammensetzung nach einem der vorstehenden Ansprüche, wobei der Anteil (B) im Grundharz in einer Menge von 20 bis 60 Gew.-% des Grundharzes vorliegt.

5. Polyethylenzusammensetzung nach einem der vorstehenden Ansprüche, wobei der Anteil (C) im Grundharz in einer Menge von 20 bis 60 Gew.-% des Grundharzes vorliegt.

6. Polyethylenzusammensetzung nach einem der vorstehenden Ansprüche, wobei der Anteil (B) ein Ethylenhomopolymer ist.

7. Polyethylenzusammensetzung nach einem der vorstehenden Ansprüche, wobei der Anteil (C) ein Copolymer von Ethylen mit einem oder mehreren α-Olefin-Comonomeren ist.

8. Polyethylenzusammensetzung nach einem der vorstehenden Ansprüche, wobei der Anteil (A) eine Dichte von 900 bis 980 kg/m³, vorzugsweise von 915 bis 965 kg/m³ aufweist.

9. Polyethylenzusammensetzung nach einem der vorstehenden Ansprüche, wobei der Anteil (B) eine Dichte von 915 bis 980 kg/m³, vorzugsweise von 940 bis 980 kg/m³ aufweist.

10. Polyethylenzusammensetzung nach einem der vorstehenden Ansprüche, wobei das Grundharz eine Dichte von 915 bis 970 kg/m³, vorzugsweise von 930 bis 970 kg/m³ hat.

11. Polyethylenzusammensetzung nach einem der vorstehenden Ansprüche, wobei das Grundharz eine MFR₅ von 0,1 bis 10 g/10 min hat.

12. Polyethylenzusammensetzung nach einem der vorstehenden Ansprüche, wobei das Grundharz mit einer Rate von mindestens 5 t/h produziert worden ist.

13. Polyethylenzusammensetzung nach einem der vorstehenden Ansprüche, wobei die Anteile (A), (B) und (C) in unterschiedlichen Stufen eines mehrstufigen Verfahrens erzeugt worden sind.

14. Verfahren zur Herstellung einer Polyethylenzusammensetzung nach einem der vorstehenden Ansprüche, wobei das Verfahren die Erzeugung der Anteile (A), (B) und (C) in Gegenwart eines Ziegler-Natta-Katalysators umfaßt.

15. Verfahren nach Anspruch 14, wobei die Anteile (A), (B) und (C) in unterschiedlichen Stufen eines mehrstufigen Verfahrens erzeugt werden.

16. Gegenstand, der eine Polyethylenzusammensetzung nach einem der Ansprüche 1 bis 13 umfaßt.

17. Gegenstand nach Anspruch 16, wobei der Gegenstand ein Rohr ist.

18. Verwendung einer Polyethylenzusammensetzung nach einem der Ansprüche 1 bis 13 für die Herstellung eines Gegenstandes.

19. Verwendung nach Anspruch 18, wobei der Gegenstand ein Rohr ist.

## Revendications

1. - Composition de polyéthylène comprenant une résine basique comprenant trois fractions d'homo- ou copolymère d'éthylène (A), (B) et (C) présentant différents poids moléculaires moyens M_{w}, où
a) la fraction (A) présente un MFR₂₁ inférieur ou égal à 20 g/10 min,
b) la fraction (B) présente un poids moléculaire moyen inférieur à celui de la fraction (C),
c) la fraction (C) présente un poids moléculaire moyen inférieur à celui de la fraction (A),
d) la composition présente une viscosité à une force de cisaillement de 747 Pa (eta₇₄₇) supérieure ou égale à 350 kPas, et
e) la composition présente un MFR₅ supérieur ou égal à 0,15 g/10 min et une surface de points blancs de 1 % ou moins.

2. - Composition de polyéthylène comprenant une résine basique comprenant trois fractions d'homo- ou copolymère d'éthylène (A), (B) et (C) présentant différents poids moléculaires moyens M_{w}, où
a) la fraction (A) présente un MFR₂₁ inférieur ou égal à 20 g/1 0 min,
b) la fraction (B) présente un poids moléculaire moyen inférieur à celui de la fraction (C),
c) la fraction (C) présente un poids moléculaire moyen inférieur à celui de la fraction (A),
d) la composition présente une eta₇₄₇ supérieure ou égale à 350 kPas, et
e) la composition présente un MFR5 supérieur ou égal à 0,15 g/10 min et un taux dans le test du taux de points blancs de la norme ISO 18553 inférieur à 4,5.

3. - Composition de polyéthylène selon la revendication 1, où la composition présente un taux dans le test du taux de points blancs de la norme ISO 18553 inférieur à 4,5.

4. - Composition de polyéthylène selon l'une quelconque des revendications précédentes, où la fraction (B) est présente dans la résine basique en une quantité de 20 à 60 % en poids de la résine basique.

5. - Composition de polyéthylène selon l'une quelconque des revendications précédentes, où la fraction (C) est présente dans la résine basique en une quantité de 20 à 60 % en poids de la résine basique.

6. - Composition de polyéthylène selon l'une quelconque des revendications précédentes, où la fraction (B) est un homopolymère d'éthylène.

7. - Composition de polyéthylène selon l'une quelconque des revendications précédentes, où la fraction (C) est un copolymère d'éthylène avec un ou plusieurs co-monomères d'alpha-oléfine.

8. - Composition de polyéthylène selon l'une quelconque des revendications précédentes, où la fraction (A) présente une densité de 900 à 980 kg/m³, de préférence de 915 à 965 kg/m³.

9. - Composition de polyéthylène selon l'une quelconque des revendications précédentes, où la fraction (B) présente une densité de 915 à 980 kg/m³, de préférence de 940 à 980 kg/m³.

10. - Composition de polyéthylène selon l'une quelconque des revendications précédentes, où la résine basique présente une densité de 915 à 970 kg/m³, de préférence de 930 à 970 kg/m³.

11. - Composition de polyéthylène selon l'une quelconque des revendications précédentes, où la résine basique présente un MFR₅ de 0,1 à 10 g/10 min.

12. - Composition de polyéthylène selon l'une quelconque des revendications précédentes, où la résine basique a été produite avec une vitesse d'au moins 5 tonnes/heure.

13. - Composition de polyéthylène selon l'une quelconque des revendications précédentes, où les fractions (A), (B) et (C) ont été produites à différentes étapes d'un procédé multi-étapes.

14. - Procédé pour la production d'une composition de polyéthylène selon l'une quelconque des revendications précédentes, lequel procédé comprend la production des fractions (A), (B) et (C) en présence d'un catalyseur Ziegler-Natta.

15. - Procédé selon la revendication 14, où les fractions (A), (B) et (C) sont produites à différentes étapes d'un procédé multi-étapes.

16. - Article comprenant une composition de polyéthylène selon l'une quelconque des revendications 1 à 13.

17. - Article selon la revendication 16, où l'article est un tuyau.

18. - Utilisation d'une composition de polyéthylène selon l'une quelconque des revendications 1 à 13 pour la production d'un article.

19. - Utilisation selon la revendication 18, dans laquelle l'article est un tuyau.
